# DEMANDE DE BREVET EUROPEEN

(11) **EP 1 867 461 A1**
(43) Date de publication de la demande: **19.12.2007**
(21) Numéro de dépôt: 06300581.3
(22) Date de dépôt: 12.06.2006
(51) Int. Cl.: B29C 51/14, B32B 38/12, B32B 27/12

(54) **Produits multicouches**

(71) Demandeur: Tarkett SAS, 92000 Nanterre (FR)
(72) Inventeur: Peres, Richard, 6600 Bastogne (BE); Bastin, Pierre, 6600 Bastogne (BE)
(74) Mandataire: Kihn, Pierre Emile Joseph

(57) **Abrégé**

Procédé de fabrication d'un produit multicouche comprenant au moins une couche dense à base de polymères et au moins une couche souple de faible densité à base de fibres, le procédé comprenant les étapes de placement de la au moins une couche dense et de la au moins une couche souple dans un outil de thermoformage, de pressage-thermoformage de la au moins une couche souple, de moulage de la au moins une couche dense sur la au moins une couche souple, et de retrait du produit multicouche de l'outil de thermoformage sans décohésion de la (des) couche(s) dense(s) et sans délamination entre les couches souple(s) et dense(s), le pressage-thermoformage de la au moins une couche souple et le moulage de la au moins une couche dense étant réalisés simultanément dans l'outil de thermoformage à des températures de mise oeuvre de 100 à 250°C et le retrait du produit multicouche étant réalisé sans refroidissement préalable grâce à l'incorporation dans la ou les couches denses d'un agent de réticulation thermique.

## Description

### Domaine technique

La présente invention concerne des produits multicouches et leur utilisation pour l'isolation acoustique et/ou thermique, ainsi qu'un procédé de fabrication de ces produits multicouches.

### Etat de la technique

Dans le domaine de l'insonorisation de composants (automobiles par exemple), on associe une couche de matière plastique dense avec une autre couche souple de faible densité.

L'association de ces deux couches, l'une souple ou très légère (à densité basse) et l'autre lourde ou à plus forte densité (également appelée "masse lourde"), constitue un moyen très usuel d'atténuer très fortement la transmission des ondes sonores pour une grande variété de fréquences (basses, moyennes et hautes fréquences).

La couche souple peut être réalisée sous forme de mousses, par exemple de polyuréthane bi-composant (isocyanate - polyol) ou polyoléfines (mousse de polyéthylène réticulé par exemple), de feutres ou de non-tissés à base de fibres naturelles ou synthétiques.

La feuille dense est généralement réalisée à base de polymères qui peuvent être additionnés ou non de manière importante en charge (par exemple la craie, la calcite, la dolomie, la baryte, l'oxyde de fer ou d'autres charges minérales). Suivant la proportion de charge (et sa densité propre), la densité de cette feuille dense est supérieure à 1 et peut aller à des valeurs proches de 2, voire nettement supérieure.

La fabrication de pièces intégrant une couche de mousse se réalise par exemple de la manière suivante.

La feuille plastique "haute densité" (fabriquée par exemple à l'aide d'un procédé d'extrusion ou de calandrage) est thermoformée dans un moule ouvert après avoir été chauffée dans une étuve.

Ensuite, le contre-moule se referme sur la feuille formée en laissant un espace entre ladite feuille et le contre-moule.

On vient ensuite injecter un bicomposant polyuréthane moussable qui se polymérise et mousse sur la feuille plastique en remplissant l'espace entre la feuille et le contre-moule.

Cette opération de moussage s'effectue par exemple en des temps de l'ordre de la minute à des températures de l'ordre de 50-80°C.

L'adhésion entre la masse lourde et la mousse polyuréthane peut être si nécessaire augmentée par un traitement Corona (réalisable par exemple lors de la fabrication de la feuille plastique). Dans d'autres cas, on préférera augmenter le potentiel d'adhésion par un flammage de la feuille formée.

On parle volontairement de multicouche et non pas uniquement de bicouche, car il peut être judicieux d'associer de la mousse polyuréthane (ou une autre couche souple à faible densité) de part et d'autre de la masse lourde pour encore augmenter les performances d'isolation acoustique du produit, sans oublier bien entendu les performances d'isolation thermique que cela apporte.

Cette opération peut s'obtenir en réalisant un bicouche masse lourde-mousse PU suivant le procédé explicité ci-dessus suivi d'une étape de dépôt de mousse PU sur la face non encore enduite de mousse PU. On peut également obtenir un tel tri-couche en ajoutant une mousse polyuréthane décrite ci-avant avec une masse lourde préalablement assemblée avec une épaisseur voulue de mousse polyuréthane tranchée.

Pour les produits à couche souple sans mousse, il existe également d'autres moyens de réaliser un multicouche masse lourde-couche souple à faible densité, intégrant un feutre composé de fibres de coton et/ou synthétiques effilochées, suivant les caractéristiques finales souhaitées. Si on le souhaite, ce feutre peut être également additivé d'une résine liante par exemple de type uréephénolformaldéhyde (ou des liants ayant des propriétés identiques "sans formaldéhyde")

A l'inverse du système à mousse polyuréthane cité ci-avant, l'assemblage du multicouche est généralement réalisé chronologiquement de la façon suivante.
1) Thermoformage-pressage du feutre (et polymérisation de sa résine liante), cette opération se fait à des températures plus élevées que celles-citées lors de l'opération de moussage, on dépasse généralement les 100°C, citons dans certains cas des températures de l'ordre de 200°C durant des durées de l'ordre de la minute. Suivant le dessin de la pièce, certains endroits du feutre sont plus comprimés que d'autres. Pour d'autres applications, le feutre peut être totalement comprimé pour obtenir un produit rigide, par exemple des tablettes dans un véhicule automobile (mais généralement, sa densité ne dépassera pas notablement l'unité).
2) Après "cuisson" du feutre, celui-ci peut être extrait du moule pour ensuite servir de support d'assemblage avec la masse lourde préalablement réchauffée ou non. Il est souvent souhaitable de déposer sur la masse lourde une couche d'adhésif par exemple de type colle thermofusible qui servira d'accrochage avec le feutre et assurera ainsi l'adhésion entre le feutre et la masse lourde lors du pressage de la masse lourde sur le feutre.
3) Comme évoqué plus haut, on pourrait envisager de même, l'emploi d'un produit tri-couche (feutre-masse lourde-feutre)

De même, on peut remplacer le feutre par des non tissés à base de fibres polypropylène, polyamides, polyester ou toutes autres fibres (p. ex. le coton, ...) qui peuvent aller de 15 g/m² à 500 g/m², voire plus. De manière générale, l'assemblage de fibres de toute nature peut également s'appliquer à un tel procédé. Dans tous ces cas, la présence d'un liant n'est pas nécessairement indispensable.

On peut également envisager de combiner une face de la masse lourde avec un feutre et l'autre face avec un non tissé ou un tri-couche non tissé-masse lourde-non tissé.

Un désavantage commun aux procédés ci-dessus est le fait qu'il faut passer par de nombreuses phases de fabrication du multicouche sans pouvoir le réaliser "en une seule étape".

En résumé, ces étapes comprennent le formage préalable du ou des feutre(s) à haute température (par exemple à 200°C), enduction éventuelle de la masse lourde ou du feutre avec une ou 2 couches d'adhésifs onéreux, dépôt de la masse lourde sur (entre) le(s) feutre(s), assemblage et formage à la température "adéquate" (par exemple à 100°C) pour réactiver la (les) colle(s) thermofusible(s).

Ces multiples étapes de fabrication pénalisent bien entendu très fortement le coût d'un tel produit.

Il est tentant d'essayer de trouver un mode de fabrication qui permette la réalisation de tels produits en une seule étape ou tout au moins en un nombre restreint d'étapes.

Cependant, il est très difficile de trouver une solution traditionnelle satisfaisante, car d'une part le (ou les) feutre(s) est (sont) formé(s), pressé(s) et le cas échéant cuit(s) à des températures très élevées (environ 200°C). Il peut en être de même pour les non tissés. D'autre part, on veut obtenir une adhérence entre deux couches de natures chimiques et physiques totalement différentes (ce qui est a priori hautement antagoniste).

On peut profiter de la chaleur nécessaire à la polymérisation et/ou au formage du feutre ou du non tissé pour faire accrocher simultanément une fine pellicule de la masse lourde aux fibres du feutre en contact avec la masse lourde, puisqu'elle sera fondue à cette température (un choix judicieux de la pression localisée permettrait ceci).

Malheureusement, lorsqu'on ouvre le moule après pressage, la masse lourde (à environ 200°C) sera à l'état "liquide" sinon "pâteux", il s'en suivra une décohésion au sein-même de la couche de la masse lourde ou une délamination entre la masse lourde et le feutre (ou le non tissé).

La solution consistant à refroidir ensuite le moule sous pression pour que la masse lourde retrouve des températures où elle est à l'état suffisamment "consistant" (par exemple cristallisé) augmente considérablement les temps de cycles. Cet allongement de la durée est aggravé par le fait que les feutres sont à faible densité et que par conséquent le transfert des calories est notablement réduit par ces réalités physiques.

De même, concevoir un outil qui assurera rapidement un transfert de chaleur (pour la polymérisation du feutre) et un même transfert de chaleur (pour le refroidissement du feutre) est également très compliqué en raison des cycles alternés de chauffe-refroidissement qui lui seront imposés.

Une autre idée consisterait alors à concevoir une masse lourde qui présente une viscosité la plus élevée possible afin que sa consistance soit suffisante (par exemple à 200°C) pour éviter une décohésion de celle-ci lors de l'ouverture du moule après polymérisation du feutre.

On constate malheureusement que pour obtenir une cohésion suffisante de la masse lourde, il faut un mélange tellement visqueux que l'accrochage mécanique avec les fibres est impossible.

La solution ultime qui consisterait à déposer une colle thermofusible sur une masse lourde de viscosité élevée n'est pas acceptable, car dans ce cas, c'est la colle thermofusible qui ne sera pas suffisamment durcie à l'ouverture du moule de pressage qui, rappelons-le, sera à une température proche de 200°C.

### Objet de l'invention

L'objet de la présente invention est par conséquent de proposer un procédé permettant de réaliser des produits multicouches comprenant au moins une couche souple et au moins une couche dense en un nombre réduit d'étapes et en des temps plus courts que les procédés de l'état de la technique.

Conformément à l'invention, cet objectif est atteint par un procédé selon la revendication 1.

### Description générale de l'invention

Afin de résoudre le problème mentionné ci-dessus, la présente invention propose un procédé de fabrication d'un produit multicouche comprenant au moins une couche dense à base de polymères et au moins une couche souple de faible densité à base de fibres, le procédé comprenant les étapes de
- placement de la au moins une couche dense et de la au moins une couche souple dans un outil de thermoformage,
- pressage-thermoformage de la au moins une couche souple,
- moulage de la au moins une couche dense sur la au moins une couche souple,
- retrait du produit multicouche de l'outil de thermoformage sans qu'il y ait décohésion de la (des) couche(s) dense(s) ou délamination entre les couches souple(s) et dense(s),

dans lequel le pressage-thermoformage de la au moins une couche souple et le moulage de la au moins une couche dense sont réalisés simultanément dans l'outil de thermoformage à des températures de mise oeuvre de 100 à 250°C et le retrait du produit multicouche est réalisé sans refroidissement préalable grâce à l'incorporation dans la ou les couches denses d'un agent de réticulation thermique.

L'avantage majeur d'un procédé selon l'invention est la réduction du nombre d'étapes et du temps nécessaires à la fabrication d'un produit multicouche comprenant au moins une couche dense et une couche souple. En effet, grâce à la réticulation de la couche dense initiée par l'agent de réticulation thermique, il devient possible de combiner les étapes de pressage-thermoformage de la couche souple et de moulage de la couche dense en une seule étape, dans les mêmes conditions de mises en oeuvre, sans que le retrait immédiat du produit de l'outil ne pose de problèmes de décohésion ou de délamination. L'invention permet de réaliser un accrochage mécanique important et résistant à haute température (par exemple 200°C) entre les couches, alors que leur compatibilité chimique peut être totalement différente, par exemple pour des raisons de coûts ou de propriétés recherchées au niveau du produit multicouche fini. Les cycles de production peuvent par conséquent être nettement réduits, tout en utilisant des outils de conception conventionnelle et sans leur imposer des contraintes thermiques particulières.

Le produit multicouche peut ainsi être retiré immédiatement de l'outil après un temps de pressage-thermoformage très court, d'une durée de 0,25 à 5 minutes, de préférence de 0,5 à 2 minutes, de manière davantage préférée de l'ordre de la minute. Conformément à l'invention, un refroidissement du produit multicouche avant le retrait n'est pas nécessaire pour éviter les problèmes de décohésion et de délamination. Le retrait peut donc se faire à la température de pressage-thermoformage-moulage et l'outil peut ainsi être maintenu à la température de mise en oeuvre. Les gains en temps et en énergie résultant du procédé selon l'invention, ainsi que l'outillage conventionnel permettent par conséquent d'accroître la rentabilité de l'opération de fabrication de produits multicouches.

La couche souple est de faible densité, c'est-à-dire nettement inférieure à 1, de préférence entre 0,005 et 0,9, d'une manière davantage préférée entre 0,01 et 0,7. Elle est à base de fibres, c'est-à-dire elle comprend des fibres naturelles et/ou synthétiques, de préférence sous forme de feutre ou de non tissé ; la couche souple peut également être sous forme de mousse, p. ex. en polyuréthane, en polyéther ou en polyoléfines, comme le polyéthylène.

Par « non tissés », on entend des amalgames de fibres naturelles ou non, discontinues ou non, liées entre elles chimiquement, thermiquement ou mécaniquement. Chaque construction offre des caractéristiques physiques différentes. Les matériaux utilisés dans la fabrication d'un non tissé sont généralement des synthétiques : PP, PET, viscose, PA, ...

Selon les normes ISO 9092 et EN 29092, le non tissé est « une feuille manufacturée, constituée de voile ou de nappe de fibres orientées directionnellement ou au hasard, liées par friction et/ou cohésion, et/ou adhésion, à l'exclusion du papier et des produits obtenus par tissages, tricotages, tuftages, couturages incorporant des fils ou filaments de liage ou feutrés par foulage humide, qu'ils soient ou non aiguilletés ».

Selon l'INDA (Association Américaine des non tissés), le non tissé est une « feuille ou un voile de fibres naturelles et/ou filaments manufacturés, exclusion faite du papier, qui n'ont pas été tissés et qui peuvent être liés entre eux de différentes façons ».

De manière simplifiée, on évoque également comme feutre, un assemblage de fibres naturelles et/ou synthétiques qui sont utilisées par recyclage en effilochant les produits textiles utilisées p. ex. dans le domaine de l'habillement, de l'habitation, de l'automobile, etc.

Les fibres naturelles et/ou synthétiques peuvent être des fibres de nature appropriée pour l'usage envisagé du produit multicouche final et sont choisies de préférence parmi les fibres polypropylènes, polyamides, polyesters, les fibres de verre, le coton, les fibres végétales, etc. Il est à noter dans ce cas que dans le cas des fibres thermoplastiques, il faut que la température de fusion des fibres soit supérieure à la température de pressage.

La couche souple peut également comprendre d'autres ingrédients facilitant sa fabrication ou la fabrication du produit multicouche, comme par exemple des agents démoulants, etc. ou ses caractéristiques finales sous forme additifs ou d'adjuvants, par exemple des résines thermodurcissables (p. ex. réticulation à l'aide de peroxydes, diamines (ou autres polyamines), ou vulcanisation à l'aide d'agents à base de composés soufrés, ...), etc. Dans une variante avantageuse du procédé, la couche souple comprend des agents thermodurcissables améliorant les propriétés physiques du produit multicouche, notamment la stabilité dimensionnelle, même à des températures élevées.

La couche dense est à base de polymères (qui sont thermoplastiques tant que l'on n'a pas introduit les agents de réticulation ou vulcanisation cités ci-avant et que l'on n'a pas soumis le mélange à des températures suffisantes pour provoquer la réticulation ou vulcanisation dudit mélange), y compris les homopolymères, copolymères statistiques, séquencés ou greffés, naturels ou synthétiques, par exemple de manière non limitative ceux choisis parmi le PVC (Chlorure de PolyVinyle), le PE (PolyEthylène, notamment le HDPE, le LDPE, le LLDPE, le VLDPE), l'EVA (copolymère Ethylène-Acétate de Vinyle), l'EBA (Ethylène-Acrylate de Butyle), l'EEA (Ethylène-Acrylate d'Ethyle), l'EP(D)M (copolymère Ethylène-Propylène et éventuellement Diène), les POP et POE (PolyOléfines Plastomères et PolyOléfines Elastomères, produits suivant un mode de polymérisation issu de catalyseurs de types métallocènes ou non), le polyisoprène, le caoutchouc naturel, les caoutchoucs butyles, les caoutchoucs SBR (Styrène-Butadiène), les SBS (polymères Styrène-Butadiène-Styrène), de même, des mélanges de ces polymères sont également possibles, suivant les exigences souhaitées.

Notons que ces polymères peuvent être produits suivant un mode de polymérisation classique ou suivant les derniers développements réalisés à l'aide de catalyseurs métallocènes (dans ces derniers cas, ces polymères sont appelés de manière simplifiées « des polymères métallocènes »).

Pour éviter la décohésion à l'intérieur de la couche dense ou la délamination entre les couches souple et dense lors du retrait immédiat, c'est-à-dire sans refroidissement préalable de l'outil, la couche dense comprend un agent de réticulation thermique qui va déclencher la réticulation, c'est-à-dire la formation de liaisons intermoléculaires, du ou des polymères contenus dans la couche dense aux températures du procédé. Par agent de réticulation thermique, il faut comprendre tous les agents appropriés généralement utilisables aux conditions de temps et de températures du présent procédé, mais également les systèmes d'agents de réticulation, c'est-à-dire ceux constitués de plusieurs composés différents complémentaires (comprenant par exemple un co-agent de réticulation) et les combinaisons ou mélanges de plusieurs agents de réticulation individuels indépendants, la nature de ces agents dépendant le cas échéant de la nature des polymères de la couche dense et des températures de mise en oeuvre du procédé. Les agents de réticulation thermique sont choisis de préférence parmi les peroxydes convenant d'une manière générale pour les polymères indiqués ci-dessus, le soufre ou des composés comprenant du soufre (p. ex. TMTD (disulfure de tétraméthylthiurame, TETD (disulfure de tétraéthylthiurame)) dans le cas de composés comportant des liaisons insaturées et les polyamines, plus préférentiellement les diamines, en particulier pour les polymères comportant des groupement acides.

Le soufre comme agent de réticulation convient particulièrement pour les polymères à l'état fondu comportant des insaturations afin de les lier entre eux grâce à une réaction dite de vulcanisation. Sans être limitatifs, les EPDM, le polyisoprène, le caoutchouc butyle, le SBS, le SBR (Styrène Butadiène Rubber) et le caoutchouc naturel font partie de cette classe de polymères.

Dans le cas de polymères comportant par exemple des fonctions acides (par exemple le produit "Vamac" de la société DuPont (terpolymère Ethylène-Acrylate contenant quelques pour cent de fonctions acides), ceux-ci peuvent être réticulés par des polyamines, notamment des diamines, par exemple l'hexaméthylènediaminecarbamate (nom commercial Diak).

Dans une variante particulièrement préférée du procédé, l'agent de réticulation thermique est choisi parmi les peroxydes, de manière particulièrement préférée le peroxyde de dicumyle, ou le 1,1-bis(ter-butylperoxy)-3,3,5-triméthylcyclohexane). Un avantage particulier des peroxydes est que cette réticulation est la plus pratique et donc souvent la plus économique, car il est plus facile de la réaliser avec des produits moins nocifs en ce qui concerne la santé ou l'environnement. En effet, le soufre cause des désagréments en terme d'odeurs et de production d'acide sulfurique lors de l'incinération et les diamines sont soupçonnées être préjudiciables pour la santé des gens qui y sont exposés.

D'une manière générale, la quantité d'agent de réticulation utilisé dans la couche dense dépendra des autres ingrédients de la couche dense et des autres conditions opératoires choisies. L'homme de métier pourra aisément déterminer la quantité nécessaire pour l'obtention de résultats appropriés. A titre indicatif l'agent de réticulation est utilisé à concurrence de moins de 7 % en poids de la couche dense, de préférence à concurrence de 0,01 à 5 % en poids de la couche dense, d'une manière davantage préférée entre 0,1 et 3 % en poids.

De même, on peut également utiliser des co-agents contenant des doubles liaisons afin d'augmenter l'efficacité de l'action des peroxydes, citons p. ex. l'isocyanurate de triallyle (TAIC), le cyanurate de triallyle ou le triméthacrylate de triméthylolpropane, les taux sont généralement égaux ou inférieurs aux taux usuels de peroxydes.

Il est important de noter que, les feutres et non tissés étant très légers, les fibres sont entourées d'énormes quantités d'air (et donc d'oxygène). Lors du pressage, il est clair que l'oxygène se trouve en quantité importante à la surface de la masse lourde. D'autre part, étant donné les coûts importants que cela engendrerait, il est illusoire de travailler dans une atmosphère sans oxygène.

Il est bien connu des hommes de métier que beaucoup d'agents de réticulation, mais en particulier les peroxydes, sont très sensibles à la présence d'oxygène et l'on pouvait donc s'attendre à l'inactivation des peroxydes et par conséquent à une inefficacité de la réaction de réticulation.

En effet, l'utilisation d'agents de réticulation est courante par exemple dans l'industrie de la câblerie : juste à la sortie de l'extrusion du polyéthylène en présence de peroxyde vers 125°C, le polyéthylène servant d'isolant électrique au conducteur (cuivre, aluminium ou autres, ...) passe dans un tube de vapeur d'eau sous pression (par exemple à 20 bars de pression, la température dépassant légèrement 200°C), ce qui permet au peroxyde de se décomposer en libérant des radicaux qui initieront d'autres radicaux sur les chaînes des polymères qui se réticuleront par recombinaison entre eux des radicaux des chaînes de polymères en des temps de l'ordre de la minute. Mais il est important que la réaction ne se fasse pas en présence d'oxygène, car il est de notoriété publique que l'oxygène inhibe fortement la réaction de liaison des chaînes. Pour cette raison, on utilise de la vapeur saturée en eau qui se dépose sur le polyéthylène et empêche ainsi l'oxygène d'entrer en contact direct avec le polyéthylène et de rendre inefficace l'action des agents de réticulation thermique.

Or, d'une manière tout à fait surprenante pour l'homme de métier, la présence d'air, et donc d'oxygène, semble ne pas empêcher (de façon préjudiciable) la réticulation de la couche dense. Sans tenter d'y apporter une explication scientifique, il est soupçonné que le fait d'avoir une épaisseur fine de masse lourde qui serait en contact avec l'oxygène soit paradoxalement un avantage permettant d'avoir quelques micromètres d'épaisseur de couche dense qui ne serait pas correctement réticulée, ce qui profiterait à la haute valeur de l'adhérence à température ambiante, alors que plus profondément au sein de la couche dense, quelques autres micromètres d'épaisseur de matière réticulée apporterait des valeurs d'adhérence correctes à chaud lors de l'extraction de la pièce vers 200°C.

En pratique, lors du pressage-formage-réticulation d'un multicouche feutre (ou non tissé)-couche dense-feutre (ou non tissé), il était surprenant de constater que la masse lourde accroche bien au feutre (ou non tissé) sur une pellicule qui est fonction de la pression exercée à 200°C, que la résistance mécanique de l'adhésion couche dense-feutre (ou non tissé) est excellente à 200°C et ce malgré la présence d'atmosphère contenant de l'oxygène et que la cohésion à chaud de la masse lourde est excellente à 200°C. Une couche dense témoin ne contenant pas d'agents de réticulation ne remplit aucune des caractéristiques ci-dessus.

Comme indiqué précédemment la couche dense peut comprendre des matières de charge minérales et/ou organiques. Les matières de charge minérales sont choisies de préférence parmi les charges de type craie, calcite, dolomie, baryte, oxyde de fer, silice, silicate et leurs mélanges. La quantité utilisée dépendra évidemment des caractéristiques souhaitées du produit multicouche, mais sera généralement inférieur à 80 % en poids, de préférence entre 5 et 75 % en poids de la couche dense.

Pour faciliter la mise en oeuvre ou pour maintenir les propriétés mécaniques requises, on peut ajouter aux mélanges de couche dense d'autres additifs ou adjuvants couramment utilisés dans le domaine, tels que notamment des huiles plastifiantes ou lubrifiantes, par exemple des huiles paraffiniques, des lubrifiants, des agents glissants, des agents anti-oxydants, ...

Les conditions de mise en oeuvre du procédé dépendront évidemment de la nature des composants utilisés. En l'occurrence, la température de mise en oeuvre est déterminée principalement par l'opération de pressage-thermoformage et se situera dans la gamme de 100 à 250°C, de préférence entre 150 et 225°C, de manière davantage préférée entre 170 et 220°C.

Le produit multicouche fabriqué au moyen d'un procédé tel que décrit ci-dessus comprend au moins une couche dense et au moins une couche de faible densité. Dans une forme de réalisation avantageuse, il comporte une couche dense et une couche souple ou, selon les besoins, une couche dense comprise entre deux couches souples. Dans ce dernier cas, les deux couches souples peuvent être de nature ou de composition identiques ou différentes. D'autres configurations comprenant plus d'une couche dense sont également possibles.

Dans un autre aspect, la présente invention concerne l'utilisation d'une composition de couche dense à base de polymères comprenant un agent de réticulation, tels que définis ci-dessus, pour la fabrication de produits multicouches comprenant au moins une couche dense et au moins une couche de faible densité.

Notons que ces produits multicouches pour l'insonorisation se révèlent être d'excellents isolants thermiques, par conséquent, dans encore un autre aspect, l'invention concerne l'utilisation d'un produit multicouche tel que défini ci-dessus pour l'isolation acoustique et/ou thermique.

Un autre aspect intéressant de l'invention est qu'il est possible de concevoir des produits multicouches dont la mise en oeuvre à haute température aura permis de rendre les couches insensibles à une élévation de température (par exemple au-delà de 150°C sans risquer un fluage d'une des couches, en particulier de la masse lourde. Ce produit fini pourra donc être exposé à des températures importantes, au-delà des températures de fusion initiales du mélange non réticulé ou vulcanisé, tout en gardant ses caractéristiques voulues (forme, acoustique, thermique, ...). Par conséquent, les produits multicouches selon l'invention sont particulièrement adaptés pour l'utilisation dans des applications soumises à des cycles thermiques nettement au-delà de la température de fusion normale des polymères mis en oeuvre.

### Exemples

Exemple 1

Une masse lourde contenant :
80 parts d'EVA (28% de VA et MFI = 3, Escorene Ultra 00328 de la société Exxonmobil)
20 parts d'Engage 8100 (POE métallocène densité 0,87 et MFI = 1, de la société Dow)
250 parts de craie (granulométrie moyenne = 2 micromètres)
20 parts d'huile paraffinique (Flexon 876) de la société Exxonmobil)
1 part d'acide stéarique
1,5 part de TAIC (TriAllyl IsoCyanurate) (co-agent de réticulation)
3 parts de peroxyde de dicumyle
a été préparée et extrudée vers 100°C ou calandrée vers 80°C (après compoundage dans un mélangeur interne de type Banbury à 100°C).

On réalise deux couches de feutres contenant de la résine uréephénolformaldéhyde (épaisseur par exemple 2 cm) ou deux couches de non tissé. On met la couche de la masse lourde (par exemple 2 kg/m²) en sandwich entre les 2 couches de feutres ou de non tissé. On presse, forme et réticule (ou vulcanise) la masse lourde et la résine liante en cas de sa présence dans le feutre ou le non tissé dans une presse à 200°C.

Après 1 minute de temps de réticulation, il n'y a aucun problème de manipulation de la pièce multicouche.

On a obtenu des résultats identique en substituant les couches "feutres" par un non tissé polyester-polyamide à 100 g/m² de la firme Colbond (Colback CI20) (environ 0,6 mm d'épaisseur).

Exemple 2

En ce qui concerne les caractéristiques de la masse lourde, des résultats identiques ont été obtenus en substituant 75 parts de craie par 125 parts de baryte.

Rappelons que l'homme de l'art pourra aisément appliquer les mêmes raisonnements dans le cas de polymères non saturés (par exemple EPDM, SBR, polyisoprène) en les réticulant (vulcanisant) à l'aide de soufre. Il en est de même en réticulant un polymère contenant des fonctions acides à réticuler avec une diamine.

En résumé, la couche dense réticulée appelée masse lourde accroche bien au feutre, non tissé, ou autre assemblage de fibres, de même, la masse lourde accroche bien à des mousses sur une pellicule fonction de la pression exercée à 200°C, la résistance mécanique de l'adhésion couche dense-feutre (ou non tissé) est excellente à 200°C et ce malgré la présence d'atmosphère contenant de l'oxygène, la cohésion à chaud de la masse lourde est excellente à 200°C. Une couche dense témoin ne contenant pas d'agents de réticulation ne remplit aucune des caractéristiques ci-dessus.

## Revendications

1. Procédé de fabrication d'un produit multicouche comprenant au moins une couche dense à base de polymères et au moins une couche souple de faible densité à base de fibres, le procédé comprenant les étapes de
- placement de la au moins une couche dense et de la au moins une couche souple dans un outil de thermoformage,
- pressage-thermoformage de la au moins une couche souple,
- moulage de la au moins une couche dense sur la au moins une couche souple,
- retrait du produit multicouche de l'outil de thermoformage sans décohésion de la (des) couche(s) dense(s) et sans délamination entre les couches souple(s) et dense(s),
**caractérisé en ce que** le pressage-thermoformage de la au moins une couche souple et le moulage de la au moins une couche dense sont réalisés simultanément dans l'outil de thermoformage à des températures de mise oeuvre de 100 à 250°C et **en ce que** le retrait du produit multicouche est réalisé sans refroidissement préalable grâce à l'incorporation dans la ou les couches denses d'un agent de réticulation thermique.

2. Procédé selon la revendication 1, dans lequel le retrait du produit multicouche est réalisé après un temps de pressage-thermoformage de 0,25 à 5 minutes.

3. Procédé selon l'une des revendications 1 ou 2, dans lequel au moins une couche souple comprend un feutre, non tissé ou autre assemblage de fibres naturelles et/ou synthétiques.

4. Procédé selon la revendication 3, dans lequel les fibres naturelles et/ou synthétiques sont choisies parmi les fibres polypropylènes, polyamides, polyesters, les fibres de verre, le coton, les fibres végétales.

5. Procédé selon l'une quelconque des revendications 1 à 4, dans lequel au moins une couche souple est réalisée à l'aide d'une mousse.

6. Procédé selon la revendication 5, dans lequel, la mousse est de type polyuréthane, polyéther, polyéthylène ou autre polyoléfine

7. Procédé selon l'une quelconque des revendications précédentes, dans lequel la ou les couches souples comprennent des agents thermodurcissables.

8. Procédé selon l'une quelconque des revendications précédentes, dans lequel le ou les polymères de la couche dense à base de polymères sont choisis parmi le chlorure de polyvinyle ; le polyéthylène, notamment le HDPE, le LDPE, le LLDPE, le VLDPE ; un copolymère d'éthylène-acétate de vinyle ; un copolymère d'éthylène-acrylate de butyle ; un copolymère d'éthylène-acrylate d'éthyle, un copolymère d'éthylène-propylène et éventuellement diène ; les polyoléfines plastomères et les polyoléfines élastomères, métallocènes ou non ; le polyisoprène ; le caoutchouc naturel ; les caoutchoucs butyles ; les caoutchoucs styrène-butadiène ; les polymères styrène-butadiène-styrène et leurs mélanges.

9. Procédé selon l'une quelconque des revendications précédentes, dans lequel l'agent de réticulation thermique est choisi parmi les peroxydes, le soufre et les composés comprenant du soufre, ainsi que les diamines.

10. Procédé selon l'une quelconque des revendications précédentes, dans lequel l'agent de réticulation thermique est le peroxyde de dicumyle.

11. Procédé selon l'une quelconque des revendications précédentes, dans lequel l'agent de réticulation thermique est utilisé à concurrence de 0,01 à 5 % en poids de la couche dense.

12. Procédé selon la revendication 10 ou 11, dans lequel la ou les couches denses contiennent un ou plusieurs co-agents de réticulation.

13. Procédé selon la revendication 12, dans lequel le ou les co-agents de réticulation sont choisis parmi l'isocyanurate de triallyle, le cyanurate de triallyle ou le triméthacrylate de triméthylolpropane.

14. Procédé selon l'une quelconque des revendications précédentes, dans lequel la couche dense comprend des matières de charge minérales et/ou organiques à concurrence de 5 à 75 % en poids de la couche dense.

15. Procédé selon la revendication 14, dans lequel les matières de charge minérales sont choisies parmi les charges de type craie, calcite, dolomie, baryte, oxyde de fer, silice, silicate et leurs mélanges.

16. Procédé selon l'une quelconque des revendications précédentes, dans lequel la couche dense comprend en outre d'autres additifs, tels que des huiles, par exemple des huiles paraffiniques, des lubrifiants, des agents glissants et/ou des agents anti-oxydants.

17. Procédé selon l'une quelconque des revendications précédentes, dans lequel la température de mise en oeuvre est comprise entre 150 et 225°C et le temps de pressage-thermoformage de l'ordre d'une minute.

18. Produit multicouche comprenant au moins une couche dense et au moins une couche de faible densité fabriquée en utilisant un procédé selon l'une quelconque des revendications 1 à 17.

19. Produit multicouche selon la revendication 18, comprenant une couche dense et une couche souple.

20. Produit multicouche selon la revendication 18, comprenant une couche dense entre deux couches souples.

21. Produit multicouche selon la revendication 20, dans lequel les deux couches souples sont de nature ou de composition différente.

22. Utilisation d'une composition de couche dense à base de polymères comprenant un agent de réticulation tels que définis ci-dessus pour la fabrication de produits multicouches comprenant au moins une couche dense et au moins une couche de faible densité.

23. Utilisation d'un produit multicouche selon l'une quelconque des revendications 18 à 21 pour l'isolation acoustique et/ou thermique.

24. Utilisation d'un produit multicouche selon l'une quelconque des revendications 18 à 21 dans des conditions comprenant des cycles thermiques nettement au-delà de la température de fusion normale des polymères mis en oeuvre.
